(19) Europäisches Patentamt / European Patent Office / Office européen des brevets

(11) **EP 4 800 159 A1**

(12) **EUROPEAN PATENT APPLICATION**

(43) Date of publication:
**02.09.2026 Bulletin 2026/36**

(21) Application number: **25382178.9**

(22) Date of filing: **27.02.2025**

(51) International Patent Classification (IPC):
***C25B 1/27*** (2021.01) ***B01D 53/32*** (2006.01)
***B01D 53/62*** (2006.01) ***B01J 10/00*** (2006.01)
***C25B 3/03*** (2021.01) ***C25B 3/05*** (2021.01)
***C25B 3/23*** (2021.01) ***C25B 3/25*** (2021.01)
***C25B 3/26*** (2021.01) ***C25B 3/27*** (2021.01)
***C25B 15/08*** (2006.01) ***H01M 8/18*** (2006.01)

(52) Cooperative Patent Classification (CPC):
**C25B 1/27; B01D 53/326; B01D 53/62; B01J 10/00; C25B 3/03; C25B 3/05; C25B 3/23; C25B 3/25; C25B 3/26; C25B 3/27; C25B 15/08;**
B01J 2204/002; B01J 2219/0803; B01J 2219/0805

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **Fundació Institut de Ciències Fotòniques**
**08860 Castelldefels (Barcelona) (ES)**

(72) Inventors:
- **Xia, Lu**
  **Barcelona (ES)**
- **Garcia de Arquer, Francisco Pelayo**
  **Barcelona (ES)**

(74) Representative: **Grünecker Patent- und Rechtsanwälte**
**PartG mbB**
**Leopoldstraße 4**
**80802 München (DE)**

(54) **PROCESS AND DEVICE FOR REACTING A GASEOUS REACTANT**

(57) The present invention relates to a process to react a gaseous reactant as well as a device to implement such.

a Standard feeding, simplified and generalized

To reactor
From reactor
Reactant (g)
Electrolyte
Redox mediator solution

b Coalesced feeding – Side introduction

To reactor
Reactant (g)
Electrolyte
Redox mediator solution

c Coalesced feeding – Bottom up (Y type)

To reactor
From reactor
Electrolyte
Reactant (g)
Redox mediator solution

d Coalesced feeding – Horizontal convection

To reactor
From reactor
Electrolyte
Reactant (g)
Redox mediator solution

e Coalesced feeding – Horizontal coflow

To reactor
From reactor
Reactant (g)
/Electrolyte
Redox mediator solution

f Coalesced feeding, – Bottom-up coflow

To reactor
From reactor
Reactant (g)/Electrolyte
Redox mediator solution

FIGURE 2

EP 4 800 159 A1

## Description

The present invention relates to a process to react a reactant, which may be gaseous but which also may be liquid, as well as a device to implement such.

## Background

Chemical reactions involving reactants which are gaseous at ambient conditions (room temperature 20° Celsius, atmospheric pressure, 1 bar) are often difficult to run, in particular if these reactions are carried out in systems involving a liquid phase containing the gaseous reactant in dissolved form. Examples of such reactions are electrocatalytic conversion of carbon dioxide into gaseous alkenes and of gaseous hydrocarbons into their respective oxides. into gaseous alkenes In these reactions, the gaseous reactant is typically directly introduced into a solvent (which may be an electrolyte), and the solution obtained thereby is fed to the reaction zone/reaction chamber. At the same time, there are also reactions, which include a liquid reactant, which may be immiscible with the other (liquid) components of the reactions (liquid-liquid-interface reactions), suffering from similar drawbacks. A liquid reactant in the sense of the present invention is a material (compound, mixture etc.) which is liquid at ambient conditions (room temperature 20° Celsius, atmospheric pressure, 1 bar), or which is liquid at the conditions at which the reaction concerned is conducted (for example increased pressure leading to a liquification of a gaseous component).

While the present invention will be described in the following in the context of reactions with gaseous reactants, the principles outlined are likewise applicable to reactions with a liquid reactant.

One typical problem encountered in relation with the running of reactions in this manner is that the gaseous reactant, predissolved in the solvent (liquid reaction medium), which is then fed to the reaction zone / reaction chamber, is that the gaseous reactant is not dissolved in a sufficiently large quantity in the solvent. This leads, once the reaction starts in the reaction zone, to a rapid depletion of the reactant. On the one hand, this impairs the efficiency of the reaction, as the reaction rate decreases with decreasing amounts of reactant available. Even if the solution of the gaseous reactant in the solvent is replenished, for example in a continuous manner, the amount of reactant available for the desired reaction fluctuates, which has a detrimental effect on the overall reaction yield. In addition, a reduced availability of the reactant can lead to an increase of undesired side reactions, which further impairs the reaction efficiency and increases the amount of undesired side products, which often are troublesome to remove. Finally, such side reactions my also impair the efficiency of catalytically active components (if present), as catalytically actives species may be converted to inactive species or species of lesser activity. Similar problems may also arise with a liquid reactant, where likewise depletion of the reactant may lead to unstable reactions, production of undesired by-products. Therefore, reactions including for example a liquid catalyst and a liquid reactant, which are not miscible, may be regarded in a similar manner as the reaction systems with gaseous reactants described above.

Attempts have been made to address these problems, for example, by using gas diffusion membranes, which allow the direct reaction of a gaseous reactant at a three-phase interface (gaseous reactant, liquid reaction medium and solid catalyst) in pores of the membranes. However, such gas diffusion membranes are difficult to prepare and are limited as regards the type of reaction available.

## Problem underlying the present invention

Accordingly, the present invention aims at overcoming the drawbacks outlined above. In particular, the present invention aims at overcoming the drawbacks associated with the known problems associated with the fluctuating concentration of the reactant as outlined above, preferably still using conventional reaction zones / reaction chambers.

## Summary of the present invention

Accordingly, the present invention provides the process as outlined in claims 1 to 10 as well as the device according to claims 11 to 15. Preferred embodiments are also provided in the description.

## Brief description of Figures

Figure 1 illustrates a schematic comparison between standard feeding systems and concurrent/coalesced feeding in accordance with the present invention.

Figure 2 illustrates examples, again in comparison to standard feeding systems, on how concurrent/coalesced

feeding in accordance with the present invention can be achieved.

## Detailed description

While the present invention will be described in the following mainly by reference to the inventive process, it will be apparent to the skilled person that the embodiments disclosed are equally suitable for the claimed device. The process of the present invention for reacting a gaseous reactant, involves the use of gaseous reactants. Gaseous reactants in accordance with the present invention are reactants which are gaseous under standard conditions (T: 20°C, pressure: 1 bar).

The present invention follows conventional setups for such reactions, wherein the reactant is reacted in a reaction chamber in solution, comprising the gaseous reactant dissolved in a solvent, wherein the reactant is introduced into the reaction chamber dissolved in the solvent. In this manner, the present invention, by being able to use known concepts for reactions as described herein, facilitates the process (and may also reduce costs), as conventional devices may be used. The present invention, contrary to conventional processes, is characterized in that, concurrent/coalesced to the introduction of the reactant dissolved in a solvent, a gaseous stream of the reactant is introduced into the reaction chamber.

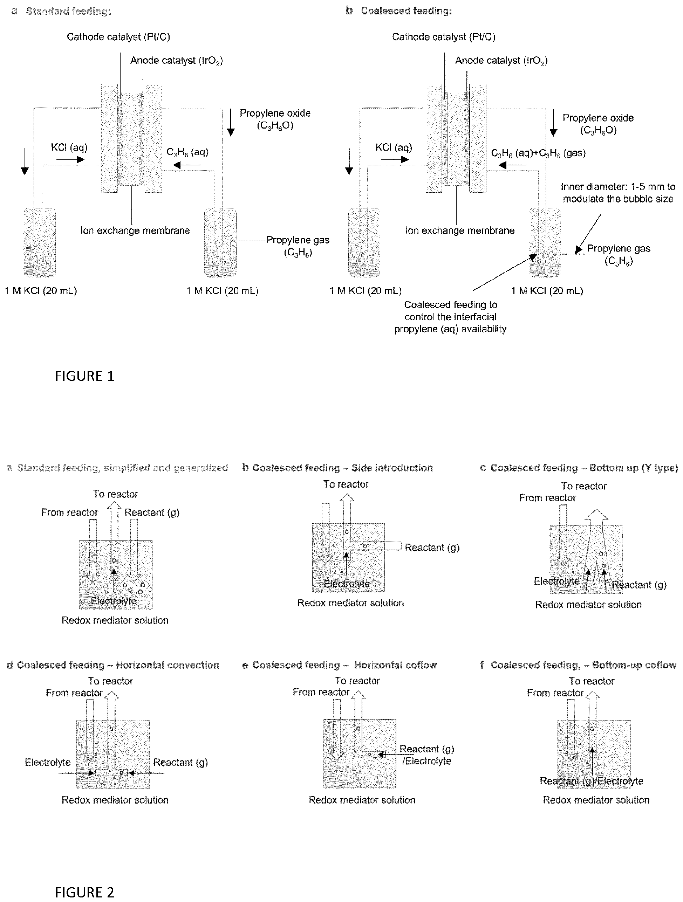

Figure 1 shows a comparison between standard feeding and coalesced feeding in a device comprising an electrocatalytic reaction chamber, namely an ion-exchange membrane electrolyzer for propylene oxidation. In standard feeding (a), aqueous propylene ($C_3H_6$) solution is introduced separately into the anode compartment, with the dissolved gas concentration limited by its solubility. In coalesced feeding (b), a mixture of propylene gas and aqueous solution is introduced concurrently, enhancing interfacial availability of propylene at the anode.

Figure 2 displays examples various feeding configurations for introducing gaseous reactants in an electrolyte system to enhance gas dissolution and reaction efficiency.

(a) Standard feeding: Separate gas and electrolyte inlets; the gaseous reactant dissolves in the electrolyte as it enters the reaction chamber.

(b) Coalesced feeding - Side introduction: The gaseous reactant enters from the side, merging with the electrolyte stream to improve dissolution.

(c) Coalesced feeding - Bottom-up (Y type): Gaseous reactant and electrolyte are introduced from the bottom in a Y configuration, allowing gas bubbles to rise and dissolve through the liquid phase.

(d) Coalesced feeding - Horizontal convection: The gas and electrolyte are fed horizontally, promoting mixing across the chamber.

(e) Coalesced feeding - Horizontal co-flow: Gaseous reactant and electrolyte flow in parallel horizontally, enhancing interface stability and reactant availability.

(f) Coalesced feeding - Bottom-up co-flow: Gaseous reactant and electrolyte enter from the bottom together, using a co-flow configuration to maintain a consistent reactant supply as gas bubbles rise through the liquid.

Depending on the reaction to be carried out or the available reaction chamber, the type of enabling coalesced feeding can be chosen. All illustrative embodiments explained above and shown in Figure 2 enable coalesced feeding in accordance with the present invention.

It has been surprisingly found, that with concurrent, preferable coalesced feeding, it is possible to overcome the drawbacks of the prior art. It has been found that the concurrent, preferably coalesced introduction of a stream of the gaseous reactant as such into the reaction chamber, enables a direct replenishing of the available reactant for the reaction, as the gaseous reactant present dissolves gradually into the solvent, so that, in embodiments, an almost constant concentration of the reactant can be ensured.

Thereby, undesired side reactions can be mitigated and the overall yield of the process can be improved.

An example of a process in accordance with the present invention is the conversion of hydrocarbons into oxides or derivatives thereof by an electrosynthetic process, for example the electrocatalytic oxidation of ethylene or propylene. Other examples include electrochemical reactions limited by gas reactant availability, including redox-mediated processes in general. Examples include:

- The electrochemical capture of $CO_2$ using capture liquids through redox couples:
  Coalesced feeding to boost $CO_2$ capture efficiency by dynamically replenishing dissolved $CO_2$ through direct gas-

phase feeding. This method prevents depletion zones near electrodes, ensures a constant saturation level in the electrolyte, and reduces mass transfer limitations. By maintaining a steady concentration of $CO_2$, coalesced feeding maximizes interaction with the capture redox agent and the reversibility and efficiency of the redox cycles. Examples of suitable redox couples are systems creating carbonates upon interaction with the $CO_2$ upon interaction as well as amines yielding amides upon interaction with $CO_2$. The reactions, in embodiments, are examples of applying the present invention to gas-liquid reactions.

- The electrocatalytic reduction of carbon dioxide and carbon monoxide into hydrocarbons or derivatives thereof: In $CO_2$ reduction to multicarbon products like ethylene and ethanol, coalesced feeding stabilizes local $CO_2$ availability, suppressing hydrogen evolution and enhancing selectivity toward desired products. By maintaining a $CO_2$-rich environment near the catalyst, it reduces concentration fluctuations and supports stable copper oxidation states, extending catalyst life. This continuous reactant replenishment ensures high current densities and consistent selectivity for $C_{2+}$ products, overcoming solubility and diffusion limitations.

- The electrocatalytic reduction of $N_2$ into ammonia.
  The low solubility of nitrogen in aqueous solutions is addressed by coalesced feeding through continuous $N_2$ gas introduction, ensuring a stable flux of reactants at the catalyst interface. This improves ammonia synthesis rates by reducing local depletion, enhancing nitrogen mass transport, and suppressing competitive hydrogen evolution. The finely dispersed gas bubbles further maximize the interfacial area, enabling more efficient $N_2$ activation and product formation.

- Energy storage using redox flow batteries

In redox flow batteries, coalesced feeding ensures uniform distribution and dissolution of gaseous reactants, such as oxygen, improving energy density and reducing polarization losses. By maintaining steady-state gas availability, coalesced feeding enhances charge/discharge efficiency, prevents imbalances in the electrolyte, and supports uniform electrochemical activity across the electrode, contributing to longer battery life and higher system capacity.

- Bioelectrocatalytic (artificial photosynthesis)
  Coalesced feeding stabilizes $CO_2$ concentrations in bioelectrocatalytic systems, such as artificial photosynthesis for methanol or methane production. The continuous and controlled gas-phase $CO_2$ delivery minimizes mass transport limitations and prevents stress on sensitive enzyme systems or photoactive materials. This approach not only improves the reaction kinetics but also extends the stability and efficiency of the biocatalysts, ensuring sustained performance in synthetic fuel generation.

In accordance with the present invention, the concurrent introduction of the gaseous reactant may be carried out in varying manner. For example, the concurrent introduction of the gaseous reactant (gaseous stream of the reactant) may enter the reaction chamber at a different position, relative to the introduction of the solution of the reactant in a solvent. Accordingly, using the electrocatalytic oxidation of propylene as an example, the solution of propylene in an electrolyte is introduced into the reaction chamber at a different position than the inlet for propylene in gaseous form. In a device in accordance with the present invention, this embodiment may be realized by having two feeding pipes entering the reaction chamber next to each other (i.e. on the same side of the reaction chamber) or at opposite sides of the reaction chamber. While the first embodiment indicated above may offer the advantage of simple access to the source of the gaseous reactant, the second embodiment may offer advantages in that the gaseous stream entering the reaction chamber is admixed better with the stream of the solution comprising the gaseous reactant.

However, in accordance with the present invention, a preferred embodiment is the embodiment wherein the concurrent introduction of the gaseous reactant is carried out coalesced with the introduction of the solution of the reactant in a solvent. Coalesced introduction in accordance with the present invention defines a process, wherein the gaseous reactant is introduced into the reaction chamber at the same entry point as the solution comprising the dissolved reactant. This may be achieved by means of a concentric conduit, wherein a concentric arrangement of two feeding pipes is provided. It has been proven advantageous, if the inner pipe introduces the gaseous reactant while the outer pipe, surrounding the inner pipe, introduces the reactant dissolved in a solvent. In this manner, the gaseous reactant flows together with the solution comprising the dissolved reactant (liquid phase) into the reaction chamber, thereby being directly available to replenish any reduction of the dissolved reactant due to the progress of the target reaction.

This embodiment may for example further include means to ensure that the gaseous reactant is introduced into the liquid phase in a finely dispersed manner, for example by using very small openings/pores in the pipe introducing the gaseous reactant (so as to produce very fine gas bubbles) or a frit at the exit point of the pipe introducing the gaseous reactant into the liquid phase (which has the same effect). The finer these gas bubbles, the better the ability of the gaseous

reactant to dissolve into the liquid phase.

Further means, suitable to be employed in the present invention to enhance gas-liquid mixing, may also be used, such as gas diffusers, spargers, static mixers, bubble columns, packed bed reactors, jet injectors, rotating disk reactors, and high-intensity stirred tanks with baffles. These techniques introduce gaseous reactants efficiently into the liquid phase, increasing contact area and promoting dissolution, which is crucial for maintaining reactant availability and consistent reaction rates.

The solvent used for dissolving the gaseous reactant (and accordingly serving as the liquid phase in the reaction chamber) is selected in accordance with the target reaction. For the electrocatalytic oxidation of propylene, for example, wherein the solvent is an aqueous solvent, preferably an electrolyte comprising water and alkali metal salts. The solvent may also comprise further additives, depending on the desired reaction, such as metal salts and co-solvents to control physicochemical properties (e.g., viscosity, polarity, boiling point). The solvent may also be non-aqueous, such as alcohols, toluene, acetonitrile, among others. The solvent may include reactive species such as redox couples that interact with the desired reactant.

However, as the present invention is not limited to electrocatalytic reactions, the solvent may also be selected among organic solvents, mixtures of organic solvents and water, etc., depending on the reactant employed and the target reaction.

In accordance with a preferred embodiment, the process in accordance with the present invention is an electrocatalytic reaction, preferably using a reaction zone being a membrane electrolyzer. Other types of electrolyzer configurations may be used as well, including diaphragm electrolyzers, gas diffusion electrode cells, solid-state electrolyzers, flow cells, hybrid-phase electrolyzers, microreactor electrolyzers, and photoelectrochemical cells. By introducing gas and liquid reactants concurrently, coalesced feeding significantly enhances reactant transport efficiency, interface stability, and reaction selectivity, addressing challenges such as local concentration fluctuations, mass transfer limitations, and side reactions.

The process in accordance with the present invention may further be a process, wherein a gaseous reactant is dissolved in a liquid medium and the liquid medium containing the dissolved gaseous reactant is then fed into a reaction chamber where the desired reaction takes place, for example in contact with a solid catalyst either supported in parts of the reaction vessel as such or present in the reaction vessel as a particulate matter (supported or unsupported).

An example thereof is a solid catalyst being present in the reaction chamber in the form of a slurry (kept in motion by stirring provided in the reaction chamber).

As indicated above, the present invention may also be applied to reactions involving a liquid reactant in a liquid-liquid system, such as reactions involving a liquid catalyst and a liquid reactant, which however are not miscible (organic-aqueous two-phase systems for example). In such a case the coalesced feeding in accordance with the present invention enables the promotion of uniform mixing, enhancement of interfacial contact and prevention of complete phase separation (in contrast to a finely dispersed status achieved by coalesced feeding). Thereby the overall system is stabilized, constant availability of catalyst and reactant at the interface is ensured, which may optimize mass transfer and stable reaction rates. Local depletion of reactant can be prevented, which in turn may support selectivity, suppress side reactions and enable an overall better control of the reaction.

In the process of the present invention, the liquid medium (solvent) is circulated so that liquid medium with a reduced amount of gaseous reactant dissolved therein is replenished either continuously or batch-wise by fresh liquid medium, typically saturated with the gaseous reactant. However, an additional amount of gaseous reactant as such is fed together (concurrent, preferable coalesced) with the fresh liquid medium into the reaction chamber.

Accordingly, the present invention provides a method wherein not only the liquid medium containing the gaseous reactant (typically dissolved, in an amount corresponding to the saturation solubility) to the reaction chamber but where an additional amount of the gaseous reactant as such is simultaneously introduced into the reaction chamber. This co-feeding of additional gaseous reactant is defined herewith as concurrent feeding, and as outlined above a preferred embodiment of the concurrent feeding is the coalesced feeding.

Thereby, the liquid medium entering the reaction chamber contains an additional amount of the gaseous reactant not yet dissolved in the liquid medium. Accordingly, once a certain amount of the dissolved gaseous reactant has reacted, additional amounts of the gaseous reactant can be dissolved in the liquid medium to avoid the situation that a rapid decrease of the amount of gaseous dissolved reactant occurs in the liquid medium.

Thereby, drawbacks such as reduced reaction rates or reduced reaction efficiency can be at least limited, because additional amounts of the gaseous reactant are present in the reaction chamber. While not being bound by the following theory, it is believed that the provision of the additional gaseous stream of reactant into the reaction chamber may enhance the overall reaction because even finely divided gas bubbles introduced into the reaction chamber burst/rupture into even smaller secondary bubbles which create additional liquid/gaseous interfaces increasing overall yield or reactivity. However, independent from any theoretical considerations, the present invention has proved that the claimed increase in yield or reactivity can in fact be obtained using the principle developed, i.e. the concurrent, preferably coalesced feeding of additional quantities of the gaseous reactant.

The process as well as the device in accordance with the present invention further may comprise means for controlling and steering the reaction. This may include the use of sensors to measure in real time concentrations of relevant components, for example dissolved reactant concentration or reaction product concentration. Based on such data a control system, preferably an automated control system can be incorporated into the device to regulate for example the gas flow rate based on real-time feedback from sensors monitoring the dissolved gas concentration. Other examples may be increase or decrease of withdrawal of a stream containing the reaction product from the reaction chamber or the adjustment of the control of the electrolyzer unit.

The concurrent, preferable coalesced feeding as described in the present application can be applied to gas-liquid, liquid-liquid, and gas-solid reactions but will be explained in the following in greater detail in the context of electrosynthesis of propylene oxide from propylene.

The electrosynthesis of propylene oxide involves the dissolution of the gaseous reactant propylene in a liquid reaction medium, namely an electrolyte, typically an aqueous solution of alkali metal salts of potassium. The liquid medium saturated with the gaseous reactant is then circulated into the reaction chamber, where the electrosynthesis of propylene oxide through a redox reaction is carried out at the (membrane)-electrode surface.

Due to the concurrent, preferably coalesced feeding in accordance with the present invention, an immediate replenishment of propylene through subsequent dissolution (once a certain amount of propylene has reacted) ensures a sustained availability of the reactant and therefore improves yield of the overall reaction and reaction efficiency. In the context of the present invention, the maintenance of a high level of availability of the gaseous reactant also can be helpful to avoid side reactions which might occur at lower concentrations of the gaseous reactant, so that again overall efficiency of the process is increased by continuously supplying the gaseous reactant, reducing the likelihood of side reactions and ensuring that the reaction equilibrium is consistently pushed towards the desired reaction pathway.

As indicated above, the present invention also provides a device suitable for carrying out the process of the present invention.

In the most basic design, this device for carrying out the process of the present invention, comprises a reaction chamber, in embodiments for example a membrane electrolyzer, and a feeding pipe for introducing a solution of a gaseous reactant in a solvent into the reaction chamber; and further comprising an additional feeding pipe for introducing the gaseous reactant (as such) into the reaction chamber, including various feeding directions such as side introduction, bottom-up (Y type) introduction, horizontal convection, horizontal co-flow, and bottom-up co-flow configurations (see Figure 2).

The two feeding pipes may, in embodiments, be provided spaced apart from each other. This may be realized by provided two pipes next to each other on the same side of the reaction chamber, of provided on different, for example opposing sides of the reaction chamber.

In a preferred embodiment, however, the two feeding pipes are arranged concentrically.

It is preferred, in such an embodiment, if the two feeding pipes are configured so that the inner pipe introduces the gaseous reactant (as such) into the reaction chamber, while the outer pipe introduces the solution of the gaseous reactant in a solvent into the reaction chamber.

In both embodiments it is preferred when the pipe configured to introduce the gaseous reactant (as such) into the reaction chamber is provided with a means to ensure that the gaseous reactant enters the reaction chamber in the form of finely divided bubbles, such as a metal sheet with fine openings or a frit. This ensures that the desired rapid replenishing of any reacted reactant dissolved in the solvent is facilitated.

Using a coalesced feeding system in accordance with the present invention the electrosynthesis of propylene oxide from propylene in a $Cl/CL_2$ -> HClO redox mediation was studied. It was found that by employing coalesced feeding the Faraday efficiency, compared to standard feeding, could be improved significantly (under otherwise identical reaction conditions and with the same proton exchange membrane electrolyzer). At the same time selectivity was improved, as undesired side reactions could be prevented. Accordingly, the overall applicability of the invention was confirmed using the illustrative electrosynthetic process as an example for the proof of the concept.

Table 1 summarizes the relevant factors in comparison to a standard feeding process.

**Table 1:** Comparison of conventional and coalesced feeding methods for $C_3H_6O$ electrosynthesis. Coalesced feeding improves $C_3H_6$ availability, reducing byproducts and enhancing selectivity and efficiency compared to conventional feeding.

| Aspect | Conventional Feeding | Coalesced Feeding |
|---|---|---|
| Reactant availability | Only a saturated solution of $C_3H_6$ is introduced. Due to limited solubility, $C_3H_6$ is quickly depleted, causing rapid drop in availability. | $C_3H_6$ gas and saturated $C_3H_6$ solution are introduced together, allowing the gas to replenish $C_3H_6$ when the liquid phase is consumed. |
| Outlet composition/ Selectivity and efficiency | Limited $C_3H_6$ availability may lead to unreacted HClO exiting the reactor or converting to $ClO_3^-$, reducing current efficiency. | High $C_3H_6$ availability ensures HClO is fully utilized, enhancing selectivity and alleviating $ClO_3^-$ formation. |
| Equilibrium | Rapid depletion of $C_3H_6$ disturbs equilibrium, leading to $Cl_2$ and HClO accumulation and $ClO_3^-$ formation upon recycling. | Steady-state equilibrium is maintained as $C_3H_6$ is continuously replenished, minimizing $ClO_3^-$ formation. |
| Mix balance | Challenging to maintain due to quick depletion of $C_3H_6$, causing fluctuating gas concentration. | Consistent $C_3H_6$ availability improves mix balance and allows better outlet control. |

| Primary reaction | $2Cl \rightarrow Cl_2 + 2e$ **(1)**<br>$Cl_2 + 2H_2O \rightarrow 2HClO + 2H^+$ **(2)**<br>$C_3H_6$ (aq, limited by solubility) + HClO → $C_3H_7ClO$ **(3)**<br>$C_3H_7ClO + OH^- \rightarrow C_3H_6O + H_2O + Cl^-$ **(4)** | $2Cl^- \rightarrow Cl_2 + 2e^-$ **(1)**<br>$Cl_2 + 2H_2O \rightarrow 2HClO + 2H^+$ **(2)**<br>$C_3H_6$ (aq, replenished by gas) + HClO → $C_3H_7ClO$ **(3)** .<br>$C_3H_7ClO + OH^- \rightarrow C_3H_6O + H_2O + Cl^-$ **(4)** |
|---|---|---|
| Side reaction with excess HClO | $2HClO \rightarrow ClO_3^- + H_2O$ | Reduced due to continuous $C_3H_6$ supply (**reaction 3**). |
| $Cl_2$ evolution | $2Cl^- \rightarrow Cl_2 + 2e^-$ | Reduced due to higher $C_3H_6$ availability and consumption of $Cl_2$. |

## Claims

1. Process for reacting a gaseous or liquid reactant, wherein the reactant is reacted in a reaction chamber, wherein the reactant is introduced into the reaction chamber either dissolved in a solvent or in liquid form, **characterized in that**, concurrent to the introduction of the reactant in liquid form or dissolved in a solvent, an additional stream of the reactant is introduced into the reaction chamber.

2. Device for reacting a gaseous or liquid reactant, wherein the device comprises a reaction chamber in which the reactant in solution can be reacted, further comprising a feeding system configured to introduce the reactant, for example dissolved in a solvent into the reaction chamber, wherein the feeding system comprises further an additional part configured to enable a concurrent introduction of an additional stream of the reactant into the reaction chamber; preferably wherein the feeding system comprises a feeding pipe for introducing a solution of a gaseous reactant in a solvent into the reaction chamber, **characterised in that** a further feeding pipe is provided for introducing the gaseous reactant (as such) into the reaction chamber.

3. Process or device according to claim 1 or 2, wherein the reactant is gaseous and the reactant is introduced into the reaction chamber dissolved in a solvent and wherein the additional stream (concurrent stream) of the gaseous reactant is introduced as a gaseous stream of the reactant.

4. Process or Device in accordance with claim 1 or 2, wherein the reaction is the conversion of hydrocarbons into oxides or derivatives thereof by an electrosynthetic process.

5. Process or Device in accordance with claim 1 or 2, wherein the reaction is the conversion of $CO_2$ and/or CO containing streams into hydrocarbons and/or derivatives thereof by an electrosynthetic process.

6. Process or Device in accordance with claim 1 or 2, wherein the reaction is the electrochemical conversion of $N_2$ containing streams into ammonia of carbon-nitrogen chemicals.

7. Process or Device in accordance with claim 1 or 2, wherein the reaction is the electrochemical capture of $CO_2$ containing streams using liquid redox couple solutions.

8. Process or Device in accordance with claim 1 or 2, wherein the gaseous reactant is selected among ethylene, propylene, and butene.

**9.** Process or Device according to any of the preceding claims, wherein the concurrent introduction of the gaseous stream of the reactant enters into the reaction chamber at a different position, relative to the introduction of the solution of the reactant in a solvent.

**10.** Process or Device according to any one of claims 1 to 8, wherein the concurrent introduction of the gaseous reactant is carried out coalesced with the introduction of the solution of the reactant in a solvent, preferably by means of a conduit, wherein a concentric arrangement of two feeding pipes is provided.

**11.** Process or Device in accordance with claim 9, wherein the concentric feeding pipes are provided, so that the inner pipe introduces the gaseous reactant while the outer pipe, surrounding the inner pipe, introduces the reactant dissolved in a solvent.

**12.** Process or Device in accordance with any of the preceding claims, wherein the solvent is an aqueous solvent.

**13.** Process or Device in accordance with claim 11, wherein the solvent is an electrolyte comprising water and alkali metal salts.

**14.** Process or Device in accordance with any of the preceding claims, wherein the reaction chamber comprises a membrane electrolyzer.

**15.** Device according to claim 2, wherein the two feeding pipes are provided spaced apart from each other.

**16.** Device according to claim 2, wherein the two feeding pipes are arranged concentrically.

**17.** Device according to claim 15, wherein the two feeding pipes are configured so that the inner pipe introduces the gaseous reactant (as such) into the reaction chamber, while the outer pipe introduces the solution of the gaseous reactant in a solvent into the reaction chamber.

**18.** Device in accordance with claims 15 or 16, wherein the pipe configured to introduce the gaseous reactant (as such) into the reaction chamber is provided with a means to ensure that the gaseous reactant enters the reaction chamber in the form of finely divided bubbles, such as a metal sheet with fine openings or a frit.

a Standard feeding:

Cathode catalyst (Pt/C)

Anode catalyst ($IrO_2$)

Propylene oxide ($C_3H_6O$)

KCl (aq)

$C_3H_6$ (aq)

Ion exchange membrane

Propylene gas ($C_3H_6$)

1 M KCl (20 mL)

1 M KCl (20 mL)

b Coalesced feeding:

Cathode catalyst (Pt/C)

Anode catalyst ($IrO_2$)

Propylene oxide ($C_3H_6O$)

KCl (aq)

$C_3H_6$ (aq)+$C_3H_6$ (gas)

Inner diameter: 1-5 mm to modulate the bubble size

Ion exchange membrane

Propylene gas ($C_3H_6$)

1 M KCl (20 mL)

1 M KCl (20 mL)

Coalesced feeding to control the interfacial propylene (aq) availability

FIGURE 1

a Standard feeding, simplified and generalized
To reactor
From reactor
Reactant (g)
Electrolyte
Redox mediator solution
b Coalesced feeding – Side introduction
To reactor
Reactant (g)
Electrolyte
Redox mediator solution
c Coalesced feeding – Bottom up (Y type)
To reactor
From reactor
Electrolyte
Reactant (g)
Redox mediator solution
d Coalesced feeding – Horizontal convection
To reactor
From reactor
Electrolyte
Reactant (g)
Redox mediator solution
e Coalesced feeding – Horizontal coflow
To reactor
From reactor
Reactant (g) /Electrolyte
Redox mediator solution
f Coalesced feeding, – Bottom-up coflow
To reactor
From reactor
Reactant (g)/Electrolyte
Redox mediator solution

FIGURE 2

Europäisches Patentamt
European Patent Office
Office européen des brevets

# EUROPEAN SEARCH REPORT

Application Number
EP 25 38 2178

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2020/240023 A1 (CAVE ETOSHA R [US] ET AL) 30 July 2020 (2020-07-30) * paragraphs [0353], [0355], [0356]; claims 1,53,56; figure 12 * | 1,2,5,14 | INV. C25B1/27 B01D53/32 B01D53/62 B01J10/00 C25B3/03 C25B3/05 C25B3/23 C25B3/25 C25B3/26 C25B3/27 C25B15/08 H01M8/18 |
| X | US 11 846 034 B1 (MARIANO RUPERTO G [US] ET AL) 19 December 2023 (2023-12-19) * col. 26, lines 24-27, from col. 31 line 64 to col. 32 line 4, from col. 32 line 66 to col. 33 line 21; claims 1,8; figures 12,16 * | 1-3,5,9, 14,15 | |
| X | WO 2019/182164 A1 (SEKISUI CHEMICAL CO LTD [JP]) 26 September 2019 (2019-09-26) * paragraphs [0022], [0023], [0024], [0026], [0087]; claim 1; figure 1; example 8; table 1 * | 1-3,5,9, 12-15 | |
| X | WO 2024/035454 A1 (UTILITY GLOBAL INC [US]) 15 February 2024 (2024-02-15) * paragraph [0059]; figure 3B * | 2,3,15 | TECHNICAL FIELDS SEARCHED (IPC) |
| X | WO 2014/160529 A1 (LIQUID LIGHT INC [US]) 2 October 2014 (2014-10-02) * paragraphs [0021], [0022], [0028], [0033], [0042] - [0044]; claims 1,3-5; figures 1,4 * | 1-4,8,9, 14,15 | C25B H01M B01D B01J |
| X | US 2022/010436 A1 (FUJINUMA NAOHIRO [US] ET AL) 13 January 2022 (2022-01-13) * paragraphs [0038], [0055], [0056], [0077] - [0081], [0168], [0205]; figure 2 * | 1,2, 12-15 | |

-/--

~~The present search report has been drawn up for all claims~~

1

| Place of search | Date of completion of the search | Examiner |
|---|---|---|
| The Hague | 25 July 2025 | Bolufer Cruañes, C |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

Europäisches Patentamt
European Patent Office
Office européen des brevets

# EUROPEAN SEARCH REPORT

Application Number
EP 25 38 2178

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | SIBAL ADAM P. ET AL: "Setting benchmarks for ethylene and propylene oxidation via electrochemical routes: a process design and technoeconomic analysis approach", GREEN CHEMISTRY, [Online] vol. 26, no. 17, 6 August 2024 (2024-08-06), pages 9455-9475, XP093293350, GB ISSN: 1463-9262, DOI: 10.1039/D4GC02672A Retrieved from the Internet: URL:https://pubs.rsc.org/en/content/articlepdf/2024/gc/d4gc02672a> [retrieved on 2025-07-08] * Abstract; Section 4.1 in page 9460; page 9461, lines 1-2; page 9459, 2nd par; figures 5,10 * | 1-4,8, 12-15 | |
| X | US 2021/308623 A1 (SORIMACHI KENJI [JP]) 7 October 2021 (2021-10-07) * paragraphs [0095], [0131], [0153] - [0156], [0160] - [0163], [0215]; claims 1-7; figure 2 * | 1-3,7, 12,13,18 | TECHNICAL FIELDS SEARCHED (IPC) |
| X | US 2016/138176 A1 (YOO CHUNG-YUL [KR] ET AL) 19 May 2016 (2016-05-19) * paragraphs [0033], [0034], [0038]; claim 1; figure 5 * | 1-3,6, 12-14,18 | |

~~The present search report has been drawn up for all claims~~

1

| Place of search | Date of completion of the search | Examiner |
|---|---|---|
| The Hague | 25 July 2025 | Bolufer Cruañes, C |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

Europäisches
Patentamt
European
Patent Office
Office européen
des brevets

Application Number

EP 25 38 2178

## CLAIMS INCURRING FEES

The present European patent application comprised at the time of filing claims for which payment was due.

☐ Only part of the claims have been paid within the prescribed time limit. The present European search report has been drawn up for those claims for which no payment was due and for those claims for which claims fees have been paid, namely claim(s):

☐ No claims fees have been paid within the prescribed time limit. The present European search report has been drawn up for those claims for which no payment was due.

## LACK OF UNITY OF INVENTION

The Search Division considers that the present European patent application does not comply with the requirements of unity of invention and relates to several inventions or groups of inventions, namely:

see sheet B

☐ All further search fees have been paid within the fixed time limit. The present European search report has been drawn up for all claims.

☐ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☒ None of the further search fees have been paid within the fixed time limit. The present European search report has been drawn up for those parts of the European patent application which relate to the invention first mentioned in the claims, namely claims:

9, 15(completely); 1-8, 12-14, 18(partially)

☐ The present supplementary European search report has been drawn up for those parts of the European patent application which relate to the invention first mentioned in the claims (Rule 164 (1) EPC).

Europäisches
Patentamt
European
Patent Office
Office européen
des brevets

# LACK OF UNITY OF INVENTION SHEET B

Application Number
EP 25 38 2178

The Search Division considers that the present European patent application does not comply with the requirements of unity of invention and relates to several inventions or groups of inventions, namely:

1. claims: 9, 15(completely); 1-8, 12-14, 18(partially)

   The concurrent introduction of the gaseous stream of the reactant enters into the reaction chamber at a different position, relative to the introduction of the solution of the reactant in a solvent.

---

2. claims: 10, 11, 16, 17(completely); 1-8, 12-14, 18(partially)

   The concurrent introduction of the gaseous stream of the reactant enters into the reaction chamber at the same entry point as the solution of the reactant in a solvent, wherein a concentric arrangement of two feeding pipes is provided.

---

## ANNEX TO THE EUROPEAN SEARCH REPORT ON EUROPEAN PATENT APPLICATION NO. EP 25 38 2178

This annex lists the patent family members relating to the patent documents cited in the above-mentioned European search report.
The members are as contained in the European Patent Office EDP file on
The European Patent Office is in no way liable for these particulars which are merely given for the purpose of information.

25-07-2025

| Patent document cited in search report | Publication date | Patent family member(s) | Publication date |
|---|---|---|---|
| US 2020240023 A1 | 30-07-2020 | AU 2019386085 A1 | 24-06-2021 |
| | | BR 112021010368 A2 | 24-08-2021 |
| | | CA 3120748 A1 | 04-06-2020 |
| | | CN 113227457 A | 06-08-2021 |
| | | EP 3887578 A1 | 06-10-2021 |
| | | JP 7468975 B2 | 16-04-2024 |
| | | JP 2022510842 A | 28-01-2022 |
| | | JP 2024096758 A | 17-07-2024 |
| | | KR 20210108387 A | 02-09-2021 |
| | | US 2020240023 A1 | 30-07-2020 |
| | | US 2023136397 A1 | 04-05-2023 |
| | | US 2024327999 A1 | 03-10-2024 |
| | | WO 2020112919 A1 | 04-06-2020 |
| US 11846034 B1 | 19-12-2023 | NONE | |
| WO 2019182164 A1 | 26-09-2019 | EP 3768877 A1 | 27-01-2021 |
| | | JP 7470045 B2 | 17-04-2024 |
| | | JP 7503116 B2 | 19-06-2024 |
| | | JP 2021517608 A | 26-07-2021 |
| | | JP 2023015238 A | 31-01-2023 |
| | | TW 201940744 A | 16-10-2019 |
| | | US 2019292668 A1 | 26-09-2019 |
| | | WO 2019182164 A1 | 26-09-2019 |
| WO 2024035454 A1 | 15-02-2024 | CN 119677896 A | 21-03-2025 |
| | | EP 4569158 A1 | 18-06-2025 |
| | | JP 2025527326 A | 20-08-2025 |
| | | KR 20250052390 A | 18-04-2025 |
| | | WO 2024035454 A1 | 15-02-2024 |
| WO 2014160529 A1 | 02-10-2014 | NONE | |
| US 2022010436 A1 | 13-01-2022 | EP 3856954 A1 | 04-08-2021 |
| | | JP 7177254 B2 | 22-11-2022 |
| | | JP 2022508992 A | 20-01-2022 |
| | | US 2020095692 A1 | 26-03-2020 |
| | | US 2022010436 A1 | 13-01-2022 |
| | | US 2025257479 A1 | 14-08-2025 |
| | | WO 2020067577 A1 | 02-04-2020 |
| US 2021308623 A1 | 07-10-2021 | CN 113439071 A | 24-09-2021 |
| | | EP 3889110 A1 | 06-10-2021 |
| | | JP 6739680 B1 | 12-08-2020 |
| | | JP 6817485 B1 | 20-01-2021 |
| | | JP 2021115569 A | 10-08-2021 |

EPO FORM P0459

For more details about this annex : see Official Journal of the European Patent Office, No. 12/82

## ANNEX TO THE EUROPEAN SEARCH REPORT ON EUROPEAN PATENT APPLICATION NO.

EP 25 38 2178

This annex lists the patent family members relating to the patent documents cited in the above-mentioned European search report. The members are as contained in the European Patent Office EDP file on
The European Patent Office is in no way liable for these particulars which are merely given for the purpose of information.

25-07-2025

| Patent document cited in search report | Publication date | Patent family member(s) | Publication date |
|---|---|---|---|
| | | JP 2021116221 A | 10-08-2021 |
| | | JP WO2021149176 A1 | 29-07-2021 |
| | | JP WO2021149289 A1 | 29-07-2021 |
| | | US 2021308623 A1 | 07-10-2021 |
| | | WO 2021149176 A1 | 29-07-2021 |
| | | WO 2021149281 A1 | 29-07-2021 |
| | | WO 2021149284 A1 | 29-07-2021 |
| | | WO 2021149289 A1 | 29-07-2021 |
| US 2016138176 A1 | 19-05-2016 | EP 3222753 A2 | 27-09-2017 |
| | | EP 3567134 A1 | 13-11-2019 |
| | | JP 6400847 B2 | 03-10-2018 |
| | | JP 2017535673 A | 30-11-2017 |
| | | KR 20170061665 A | 05-06-2017 |
| | | US 2016138176 A1 | 19-05-2016 |
| | | WO 2016080645 A2 | 26-05-2016 |

EPO FORM P0459

For more details about this annex : see Official Journal of the European Patent Office, No. 12/82